# EUROPEAN PATENT SPECIFICATION

(11) **EP 1 787 163 B1**
(45) Date of publication and mention of the grant of the patent: **24.11.2010**
(21) Application number: 04772891.0
(22) Date of filing: 01.09.2004
(51) Int. Cl.: G02F 1/313, G02F 1/065

(54) **OPTICAL SWITCH**
OPTISCHER SCHALTER
COMMUTATEUR OPTIQUE

(43) Date of publication of application: 23.05.2007
(73) Proprietor: Panasonic Electric Works Co., Ltd., Kadoma-shi Osaka (JP); Fraunhofer-Gesellschaft zur Förderung der angewandten Forschung e.V., 80686 München (DE)
(72) Inventor: UCHIDA, Yuichi c/o Matsushita Electric Works Ltd., Kadoma-shi Osaka 5718686 (JP); MIYAGAWA, Nobuyuki Matsushita Electric Works, Ltd, Kadoma-shi Osaka 5718686 (JP); WAECHTER, Christoph, D07745 (DE); DANNBERG, Peter, D07745 (DE)
(74) Representative: Appelt, Christian W.
(86) International application number: PCT/JP2004/013019
(87) International publication number: WO 2006/025116

(56) References cited:
- EP-A- 1 406 114
- US-A1- 2001 055 440
- US-A1- 2003 035 612
- PATENT ABSTRACTS OF JAPAN vol. 2003, no. 12, 5 December 2003 (2003-12-05) -& JP 2004 085744 A (MATSUSHITA ELECTRIC WORKS LTD), 18 March 2004 (2004-03-18)

## Description

### TECHNICAL FIELD

The present invention relates to an optical switch for selecting optical paths by the thermo-optic effect.

### BACKGROUND ART

Japanese Patent Publication No. 58-93036 discloses a thermo-optic switch including a branched core which is formed in a clad layer to form a Y-shaped light guide with an input line and two output lines branched off from the input line through a node. Two heater elements are formed on the clad layer above the respective output lines for selectively heating one of the output lines to raise the refractive index of the heated output line, thereby enabling the light to transmit through the heated output line and allowing the light to travel through the non-heated output line. The thermo-optic switch using quartz or the like material having a positive thermo-optic coefficient relies upon the above mechanism. When, on the other hand, the optic switch is made from a polymer having a negative thermo-optic coefficient, the switching mechanism works in the opposite manner that the heated output line sees lowering of the refractive index, allowing the non-heated output line to transmit the light. In general, as the polymer has the thermo-optic coefficient of which absolute value is greater than that of the quartz or the like, it takes an advantage of utilizing a greater change in the refractive index for the same temperature change, therefore enabling the switching of the light at a reduced electric power. However, the optical switch using the polymer sees difficulty in realizing sufficient isolation between the two output lines. This is because of that the each of the heater elements is disposed close to the node of the branch and is likely to heat the active output line, i.e., one not intended to be heated, to some extent at a portion adjacent the node. With this result, the light will more or less diffuse or radiate out through the active output line at the portion adjacent the node, thereby lowering the isolation between the output lines with attendant increase of the insertion loss.

From JP 2004-085744 an optical switch 10 equipped with heaters 41, 42 is known to selectively impart a photothermal effect to either one out of cores 21, 22 on the light emitting side of a Y branched optical waveguide, grooves 51, 52 to restrict heat conduction to the sides opposite to the cores 21,22, to which the photothermal effect with heat generated by the heaters 41, 42 is imparted, are provided. Thereby heat formerly dissipated to surroundings is confined inside the grooves 51, 52, the desired cores 21, 22 are effectively heated and the power saving optical switch is realized. Furthermore, because heat capacity corresponding to temperature elevation with the heaters 41, 42 is reduced by the grooves 51, 52, response of the optical switch 10 based on the photothermal effect is quickened.

From EP 1 406 114 A1 an optical device is known comprising a core layer; a first clad layer, with the core layer being deposited on a part of surface of the first clad layer; a second clad layer, with the core layer being provided between the first clad layer and the second clad layer; a third clad layer deposited on the second clad, an electrode for heating, and a substrate having a heat-sink function. At least one of the core layer and the clad layers comprises a material having a positive refractive index variation coefficient. The third clad layer has a refractive index smaller than that of the second clad layer.

### DISCLOSURE OF THE INVENTION

In view of the above insufficiency, the present invention has been accomplished to provide an improved optical switch with high isolation and low insertion loss. The optical switch in accordance with the present invention includes a substrate having a length and width, a clad layer formed on the substrate and having a negative thermo-optic coefficient (dn/dT), and a core embedded within the clad layer to be surrounded thereby. The core extends horizontally generally along the length of the substrate. The core is made of a transparent material having a negative thermo-optic coefficient (dn/dT) and has a refractive index different from the refractive index of the surrounding clad layer to give a difference between these refractive indexes so as to constitute a light guide with the surrounding clad layer for transmitting the light. The core is shaped to have an input line leading from a light input terminal to a node, two output lines branching off from the node and leading to individual light output terminals. Also included in the switch are two heater elements each disposed adjacent to each of the two output lines and extending horizontally generally along the length of the substrate. The heater elements are adapted to be connected to a voltage source for selectively heating one of the output lines to lower the refractive index thereof to such an extent as to make the selected output line inactive. The two output lines of the core are each shaped to include a straight segment that branches off from the node. Each heater element includes a main strip that overlaps at least partially with the straight segment of the adjacent output line with respect to a horizontal projection plane on which the heater elements and the core, and also includes a deflector strip that extends from the main strip along the node with respect to the horizontal projection plane. The characterizing feature of the present invention resides in that each of the deflector strips runs in a spaced relation with the node and in a generally parallel relation with an extension line of the straight segment of the non-associated output line with respect to the horizontal projection plane. Due to the structural requirement that the node inherently includes a region or length in which the two output lines merge with each other, the deflector strip is provided to heat a part of the node leading to the inactive output line but to keep the other part leading to the active output line from being thermally unaffected, thereby deflecting the light within the node for directing it successfully into the active output line. In this connection, it is found most effective to dispose each of the deflector strips to run in a generally parallel relation with the extension line of the straight segment of the non-associated output line, i.e., the active output line with respect to the horizontal projection plane. With this spatial arrangement, it is made possible to increase the isolation between the output lines and lower the insertion loss.

The heat dissipater is disposed at the interface between said clad layer (20) and said substrate 10, said heat dissipater having a thermal conductivity higher than said clad layer in order to expedite thermal transfer of heat from each one of said heater elements to said substrate for protecting the non-heated one of said output lines from being thermally affected, wherein said heat dissipater is formed integrally with said substrate to project into the clad layer at a portion between said straight segments of the two output lines with respect to the horizontal projection plane.

The optical switch may further include an introductory heat dissipater which is disposed at the interface between said clad layer and said substrate, and formed integrally with said substrate to project into the clad layer at a portion downwardly of said input line, said introductory heat dissipater having a thermal conductivity higher than said clad layer in order to expedite thermal transfer of heat conducting through said input line to said substrate.

The heat dissipater may include, within said horizontal projection plane, a triangular section with two adjacent sides forming a vertex therebetween, said triangular section being disposed to overlap with said straight segments adjacent to said node with said vertex directed away from said node and with said two adjacent sides generally in parallel relation respectively with said deflector strips of said heater elements with respect to said horizontal projection plane.

The optical switch may be configured to have the clad layer being composed of a lower clad layer and an upper clad layer which are superimposed on the substrate step-by-step, and a pair of bottom clad layers disposed in said lower clad layer between said upper clad layer and said substrate, said bottom layers being laterally spaced from each other and offset laterally outwardly of the adjacent output lines with respect to the horizontal projection plane, said bottom clad layer having a refractive index lower than said clad layer.

Each of said bottom clad layers may have its top lower than the top of said output lines of said core.

These and still other advantageous features of the present invention will become more apparent from the following description of the preferred embodiments when taken in conjunction with the attached drawings.

### BRIEF DESCRIPTION OF THE DRAWINGS

FIG. 1 is an exploded perspective view of an optical switch in accordance with a preferred embodiment of the present invention;
FIG. 2 is a perspective view of a major portion of the switch;
FIG. 3 is a top view of the major portion of the switch including a core and heater elements;
FIGS. 4 and 5 are enlarged top view illustrating the relation between the core and the heater elements;
FIG. 6 is a partial perspective view illustrating a heat dissipater formed on a substrate of the switch;
FIG. 7 is an enlarged top view illustrating a spatial relation of the heat dissipater with the heater elements and the core;
FIG. 8 is an enlarged top view illustrating isothermal lines given by heating one of the heater elements;
FIGS. 9 to 11 are sections of the switch respectively taken along line X-X, line Y-Y, and Z-Z of FIG. 7;
FIGS. 12A, 12B, and 12C are sectional views illustrating a thermal effect of the switch, respectively at one cross section;
FIGS. 13A and 13B are graphs illustrating an advantageous effect of the switch; and
FIG. 14 is a sectional view which is similar to FIG. 10 but illustrates another preferred embodiment of the present invention.

### BEST MODE FOR CARRYING OUT THE INVENTION

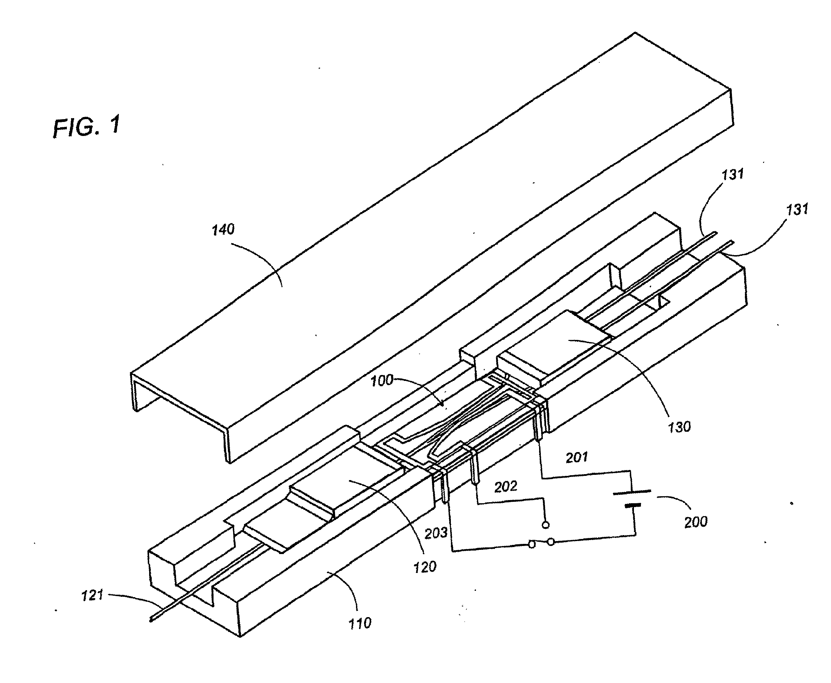

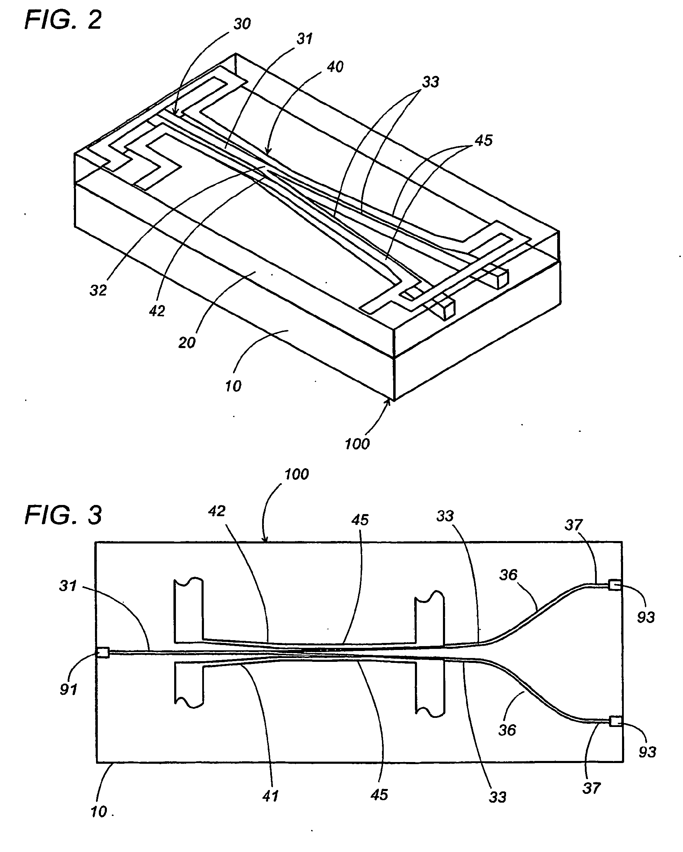

Referring now to FIG. 1, there is shown an optical switch in accordance with a preferred embodiment of the present invention. The optical switch **100** is adapted in use to be inserted in an optical fiber network for switching the light signal using the thermo-optic effect. The switch **100** is accommodated in a rectangular base **110** together with an input connector **120** for one input optical fiber **121** and an output connector **130** for two optical fibers **131.** A cover **140** is fitted on the base **110** to conceal therebetween the switch **100** and the connectors **120** and **130.** As shown in FIG. 2, the switch **100** is shaped into a rectangular module of a layered structure including a substrate **10** made of a silicon crystal, a clad layer **20,** a core **30** embedded in the clad layer, and two independent heater elements **40** deposited on top of the clad layer **20.** The switch **100** also includes a set of electrodes **201, 202,** and **203** for electrically connecting the heater elements **40** to an external voltage source **200** to selectively heat one of the heater elements **40** to transmit light incoming though the input optical fiber **121** to one of the two optical fibers **131.**

The clad layer **20** and the core **30** are both made of a polymer such as polyimide. The core **30** is selected to give a refractive index greater than the clad layer **20** to give a refractive index difference (Δn) of 0.004 to 0.008, and is cooperative with the clad layer **20** to define a light guide for transmitting the light.

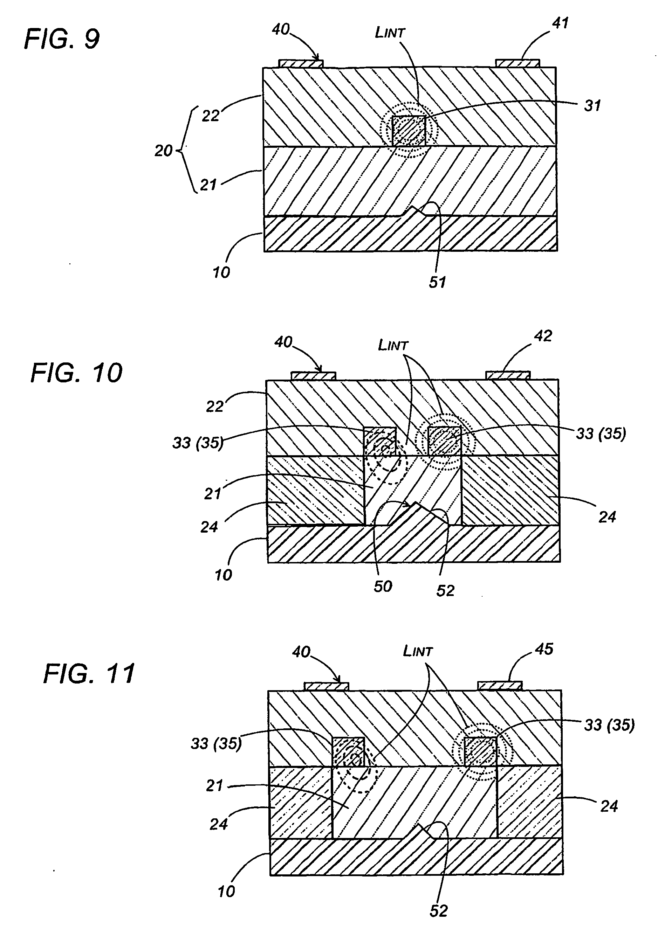

As shown in FIGS. 9 to 11, the clad layer **20** is composed of a lower clad layer **21** and an upper clad layer **22** which are superimposed on the Si substrate **10** step-by-step, while the core **30** is superimposed partially on the lower clad layer **21.** The thickness of the lower clad layer **21** is selected to be between 7 µm to 20 µm as measured from the top of the substrate **10** to the bottom of the core **30,** while the thickness of the upper clad layer **22** is also between 7 µm to 20 µm as measured from the top of the core **30.** The thickness of the upper clad layer **22** where the core **30** is not present is therefore increased by the thickness of the core **30.**

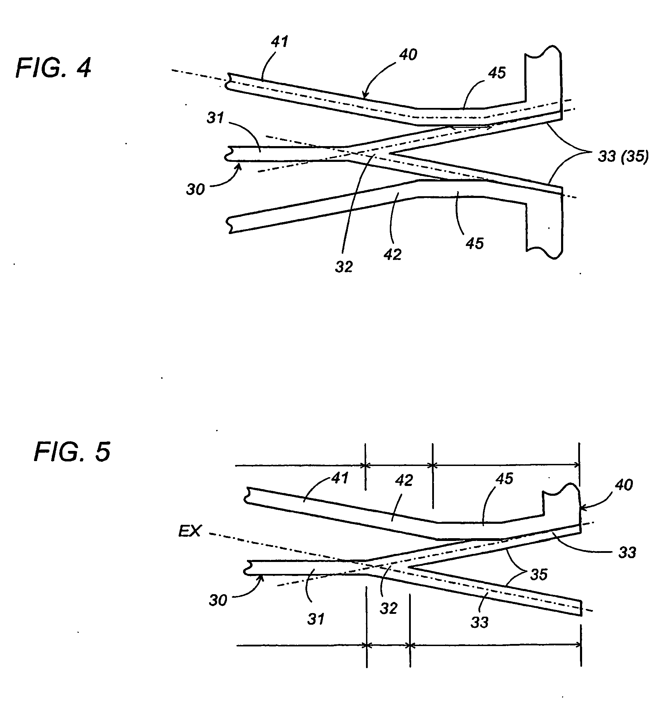

As shown in FIGS. 2 and 3, the core **30** is shaped to have a generally square cross-section and extends horizontally within the clad layer **20** to form a Y-shape planar configuration with an input line 31 and two output lines **33** branched off from the input line **31** through a node **32.** Thus, the width of the core **30** is uniform expect at the node **32,** as best seen in FIG. 5. The width of the input line **31** and the output lines **33** is selected to be about 4 µm to 8 µm. The input line **31** extends straight from a light input terminal **91** which is connected to the input optical fiber **121** by means of the input connector **120.** Each output line **33** includes a straight segment **35** that branches off from the node **32,** a curved segment **36** extending from the straight segment **35,** and a rear straight segment **37** extending from the curved segment **60** and terminating at an output terminal **93,** which is connected to each of the output optical fibers **131** at the output connector **130.** The curved segment **36** is introduced for the purpose of reducing the overall length of the switch **100.** The straight segments **35** are branched off from the node **32** at an angle of 0.1 ° to 0.2° and extend to a point where the two straight segments are spaced from each other at a distance 3 to 5 times the width of the core, i.e., 12 µm to 20 µm in case the core width is 4 µm. With this planar geometric of the core **30,** the switch is given an improved isolation as much as 35 dB or more. When one of the heater elements **40** is energized, the adjacent one of the output lines **33** as well as a surrounding portion thereof are heated to lower their refractive indexes, whereby the corresponding output line **33** becomes inactive while keeping the other output line **33** active to direct the light therethrough.

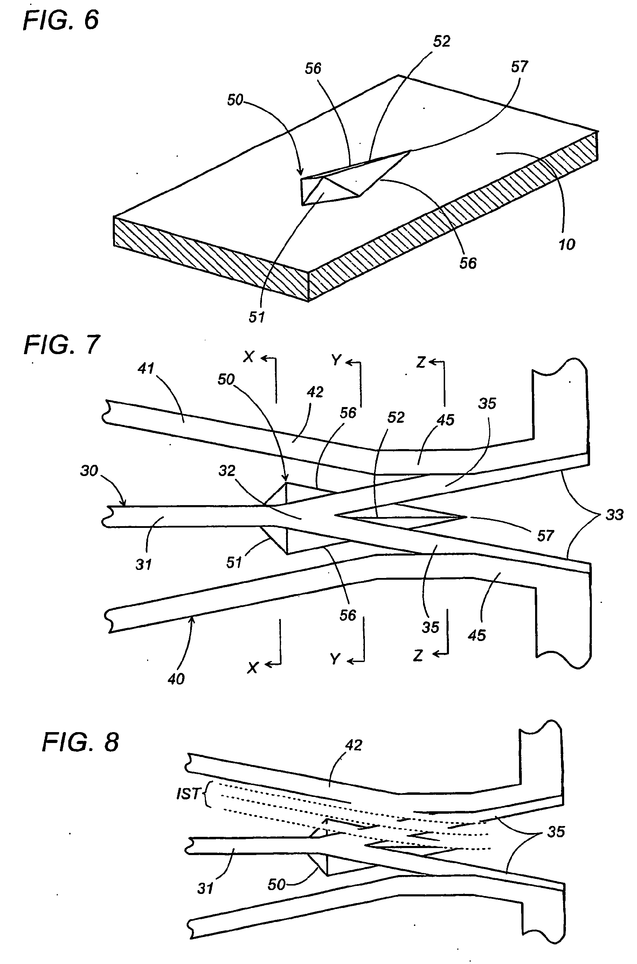

Referring to FIGS. 4 and 5, each of the heater elements **40** is shaped to have a main strip **45** partially overlapping with the end of the straight segment **35** of the associated one of the output lines away from the node **32** with regard to a horizontal projection plane in which the heater elements **40** and the core **30** project. Hereinafter, unless otherwise mentioned, the horizontal projection plane is relied upon to describe the heater element **40** in relation to the core **30** and other parts. The main strip **45** is mainly responsible for heating and therefore deactivating the adjacent one of the output lines **33.** The main strip **45** overlaps with the straight segment **35** only at a portion of the straight segment outwardly of a center line thereof, thereby giving a sufficient gap to the other output line **33** to minimize the thermal effect on the straight segment **35** of the active output line **33.** Upon one of the heater elements **40** being energized, the straight segment **35** of the adjacent output line **33** as well as the surrounding portion of the clad layers **21** and **22** are heated to lower their refractive indexes so that the output line **33** becomes inactive as a result of that the light intensity distribution LINT is greatly distorted or offset from the center of the output line **33,** as indicted by dotted lines of FIGS. 10 and 11, which are cross sections corresponding to line Y-Y and Z-Z of FIG. 7, while the other output line **33** is kept free from critical thermal affection to direct the light therethrough in a regular pattern of the light intensity distribution LINT, the same as in the input line **31,** as shown in FIG. 9.

Each heater element **40** further includes a deflector strip **42** which is responsible for deflecting the light passing within the node **32** towards the active one of the straight segments **35** or the output lines **33.** The deflector strip **42** extends continuously from the main strip **45** along a portion of the straight segment **35** and the node **32** while it is laterally spaced by a larger extent from the adjacent straight segment **35** as it extends away from the main strip **45.** In detail, the deflector strip **42** runs generally in parallel with an extension line EX of the non-associated straight segment **35,** as best shown in FIG. 5, to heat only the adjacent side of the node **32** to deflect the light into the straight segment **35** of the active output line **33,** while avoiding that straight segment **35** from being thermally affected to a critical extent. Further, the heater element **40** is additionally formed with an introductory strip **41** which extends continuously from the deflector strip **42** to run along a portion of the input line **31.** The introductory strip **41** is provided to heat the adjacent side or the width part of the input line **31** to some extent in order to offset the light passing through the input line **31** towards the non-adjacent side thereof leading through the node **32** to the straight segment **35** of the active output line **33,** thereby effectively guiding the light from the input line **31** past the node **32** to the active output line **33** with improved isolation. The introductory strip **41** extends continuously along the same axis of the deflector strip **42** in an inclined relation with respect to the input line **31** so as to come closer to the input line as it advances to the deflector strip **42.**

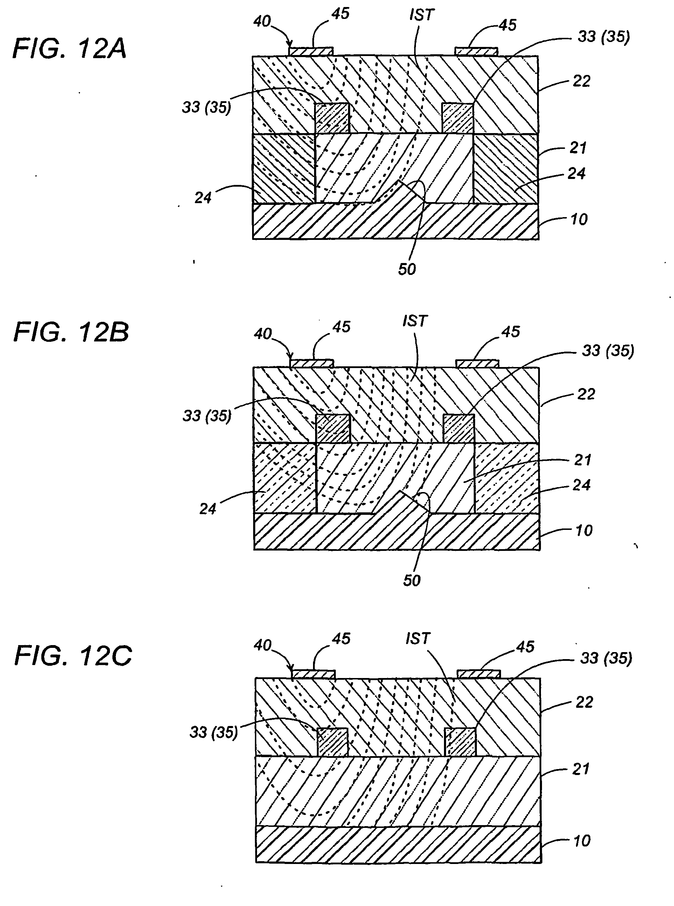

Referring to FIGS. 6 to 10, a heat dissipater **50** is formed at the interface between the substrate **10** and the lower clad layer **21** to absorb the heat given off from one of the heater elements **40** for protecting the core **30** from being adversely affected by the heat. The heat dissipater **50** is fabricated integrally with the Si substrate **10** to project into the lower clad layer **21,** and has a thermal conductivity higher than the clad layers **21** and **22.** With the provision of the heat dissipater **50,** the heat given off from one of the heater elements **40** and conducting past the adjacent output line **33** can be well absorbed by the heat dissipater **50,** as indicated by isothermal lines IST of FIG. 12A, to thereby protect the other output line **33** from being thermally affected critically. This is true even if a large amount of heat is applied in an attempt to improve the isolation, i.e., to minimize the light radiation out from the active output line and maximize the light transmission therethrough. In this case, corresponding isothermal lines IST becomes tense, as shown in FIG. 12B, so that the active output line **33** can be kept from being thermally affected even by the increased amount of the heat. Otherwise, the active output line **33** would be thermally affected to increase the insertion loss, as shown in FIG. 12C.

Turning back to FIGS. 6 and 7, the heat dissipater **50** is kite-shaped in a planer configuration to have a front small triangular section **51** and a rear large triangular section **52** within the horizontal projection plane, and is arranged immediately downwardly of the node **32** to overlap the same as well as the adjacent portions of the core **30** with the front small triangular section **51** disposed on the side of the input line **31,** as best shown in FIG. 6. The rear triangular section **52** has two adjacent sides **56** which run parallel to the adjacent deflector strip **42** and merges into a rear vertex **57** in registration with an axis of the input line **31.** Since the adjacent sides **56** is generally in parallel with the adjacent deflector strip **42,** the isothermal lines IST (indicated by dotted lines in FIG. 8) developed by heating one of the heater elements **30** also runs parallel to the straight segment **35** of the active output line **33** so that the above effect of protecting the active output line **33** from being thermally affected can be optimized, thereby improving the isolation as well as reducing the insertion loss of the switch. In this connection, the top faces of the rear triangular sections **52** are each inclined to be directed the adjacent straight segment **35,** as seen in FIGS. 10 and 11, to give a temperature gradient along that direction so as to distort the light in the inactive output line **33** not to interfere with the light propagating through the active output line **33** for improved isolation of the light.

The front small triangular section **51** is provided to define an introductory heat dissipater for successfully directing the light from the input line **31** to the active output line **33** past the node **32.** The introductory heat dissipater **51** is disposed at a portion downwardly of the input line **31** immediately below the node **32** in order to expedite thermal transfer of heat conducting towards the input line **31,** thereby heating only the adjacent side of the input line **31** and therefore keeping the opposite adjacent side free from being thermally affected for effectively offsetting the light proceeding into the node **32** and subsequently into the active output line **33.**

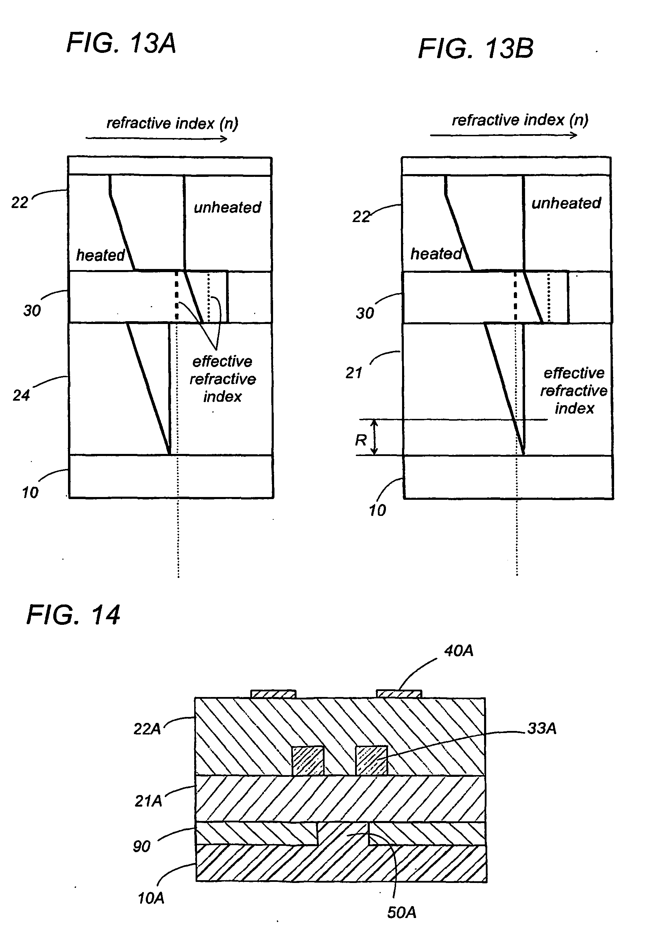

As shown in FIGS. 10 and 11, the switch includes a pair of bottom clad layers **24** which are disposed adjacent to the substrate **10** and have a refractive index lower than the lower clad layer **21.** The bottom clad layers **24** are laterally spaced from each other and offset laterally outwardly of the adjacent output lines **33** with respect to the horizontal projection plane. The bottom clad layers **24** are introduced to minimize the thermal effect on the active output line **33** when the other output line is heated to become inactive, for optimum light transmission efficiency through the active output line **33.** For this purpose, the bottom clad layer **24** is located on an extension line connecting one of the heater elements **40** and the non-associated one of the output lines **33** to give a refractive index gradient along that line, as shown in FIG. 13A, in which relatively thin lines indicate the refractive index (n) when the active output line is not heated, while relatively thick lines indicate the refractive index (n) when the active output line is heated. Also in the figure, effective refractive index of the core is indicated by dotted lines. With this arrangement of giving a lowered refractive index to a portion, i.e., the bottom clad layer **24** which is remote from the source of heat and is therefore subject to less lowering of the refractive index than the upper clad layer **22,** the active output line **33** can be surrounded entirely by the portion having the lowered refractive index than that of the output line **33.** Whereby, the active output line **33** can be given its maximum efficiency for transmitting the light to minimize the radiation loss. Otherwise, i.e. without the bottom clad layer of lowered refractive index, the lower clad layer **21** may be given at its bottom a region having the refractive index still greater than that of the active output line, as indicated by R in FIG. 13B, which induces a certain radiation loss and detracts from the optimum light transmitting efficiency. In order to take the advantages of the above effect, each of the bottom clad layers **24** are preferred to have its top adjacent to the top of the core **30.** However, the bottom clad layer **24** may have its top lower than the bottom of the core **30,** as shown in FIGS. 11 and 12.

FIG. 14 illustrates the present invention which is basically identical with the above embodiment except that a flat heat dissipater **50A** is fabricated as an integral part of the Si substrate **10A.** Uke parts are designated by like reference numerals with a suffix letter of "A". In this embodiment, the heat dissipater **50A** is formed to remain integral with the Si substrate **10A** by oxidizing the peripheral portion **90** into SiO₂.

## Claims

1. An optical switch comprising:
a substrate (10; 10A) having a length and width;
a clad layer (20) formed on said substrate and having a negative thermo-optic coefficient (dn/dT);
a core (30) embedded within said clad layer to be surrounded thereby,
said core extending horizontally generally along the length of said substrate,
said core being made of a transparent material having a negative thermo-optic coefficient (dn/dT), said core having a refractive index different from a refractive index of the surrounding clad layer to give a difference between these refractive indexes so as to constitute a light guide with the surrounding clad layer for transmitting the light, said core including an input line (31) leading from a light input terminal (91) to a node (32), two output lines (33) branching off from said node and leading to individual light output terminals (93),
two heater elements (40) each disposed adjacent to each of said two output lines to extend horizontally generally along the length of said substrate, said heater elements being adapted to be connected to a voltage source for selectively heating one of said output lines to lower the refractive index thereof to such an extent as to make the selected output line inactive,
said two output lines of the core including individual straight segments (35) that branch off from said node (32),
each of said heater elements (40) including a main strip (45) overlapping at least partially with said straight segment (35) of the adjacent output line (33) with respect to a horizontal projection plane on which the heater elements and the core project, and a deflector strip (42) extending from said main strip (45) along said node (32) with respect to said horizontal projection plane, wherein each of said deflector strips (42) runs in a spaced relation with said node (32) and in a generally parallel relation with an extension line of the straight segment (35) of the non-associated output line (33) with respect to said horizontal projection plane,
a heat dissipater (50; 50A) being disposed at the interface between said clad layer (20) and said substrate (10),
said heat dissipater (50; 50A) having a thermal conductivity higher than said clad layer in order to expedite thermal transfer of heat from each one of said heater elements to said substrate for protecting the non-heated one of said output lines from being thermally affected,
**characterized in that**
said heat dissipater (50) is formed integrally with said substrate to project into the clad layer at a portion between said straight segments (35) of the two output lines with respect to the horizontal projection plane.

2. The optical switch as set forth in claim 1, further including:
an introductory heat dissipater (51) which is disposed at the interface between said clad layer and said substrate, and formed integrally with said substrate to project into the clad layer at a portion downwardly of said input line (31),
said introductory heat dissipater having a thermal conductivity higher than said clad layer in order to expedite thermal transfer of heat conducting through said input line to said substrate.

3. The optical switch as set forth in claim 1, wherein
said heat dissipater (50) includes, within said horizontal projection plane, a triangular section (52) with two adjacent sides (56) forming a vertex (57) therebetween, said triangular section being disposed to overlap with said straight segments (35) adjacent to said node (32) with said vertex directed away from said node and with said two adjacent sides (56) generally in parallel relation respectively with said deflector strips (42) of said heater elements (40) with respect to said horizontal projection plane.

4. The optical switch as set forth in claim 1, wherein
said clad layer (20) is composed of a lower clad layer (21) and an upper clad layer (22) which are superimposed on the substrate (10) step-by-step, and that
a pair of bottom clad layers (24) are disposed in said lower clad layer (21) between said upper clad layer (22) and said substrate (10),
said bottom layers being laterally spaced from each other and offset laterally outwardly of the adjacent output lines (33) with respect to the horizontal projection plane,
said bottom clad layer (24) having a refractive index lower than said clad layer.

5. The optical switch as set forth in claim 4, wherein
each of said bottom clad layers (24) has its top lower than the top of said output lines of said core.

## Patentansprüche

1. Optischer Schalter umfassend:
ein Substrat (10; 10A) mit einer Länge und einer Breite;
eine Mantelschicht (20), die auf dem Substrat ausgebildet ist und einen negativen thermooptischen Koeffizienten (dn/dT) aufweist;
einen Kern (30), der in der Mantelschicht eingebettet ist, um von ihr umgeben zu sein, wobei der Kern sich horizontal im Wesentlichen entlang der Länge des Substrats erstreckt, wobei der Kern aus einem transparenten Material mit einem negativen thermooptischen Koeffizienten (dn/dT) gebildet ist, wobei der Kern einen Brechungsindex aufweist, der sich von einem Brechungsindex der umgebenden Mantelschicht unterscheidet, um eine Differenz zwischen den Brechungsindizes zu erhalten, sodass ein Lichtleiter mit der umgebenden Mantelschicht zum Transport von Licht gebildet ist, wobei der Kern eine Einlassleitung (31), die von einem Lichteinlassterminal (91) zu einem Knoten (32) geführt ist, umfasst und zwei Auslassleitungen (33), die sich von dem Knoten abzweigen und zu individuellen Lichtauslassterminals (93) führen, aufweist,
zwei Heizelemente (40), wobei jedes benachbart zu jedem der zwei Auslassleitungen angeordnet ist und sich horizontal im Wesentlichen entlang der Länge des Substrats erstrecken, wobei die Heizelemente ausgebildet sind, um an einer Spannungsquelle angeschlossen zu werden, um selektiv eine der Auslassleitungen zu erwärmen, um deren Brechungsindex soweit zu verringern, dass die ausgewählte Auslassleitung deaktiviert ist, wobei die zwei Auslassleitungen des Kerns individuelle gerade Segmente (35) aufweisen, die von dem Knoten (32) abzweigen,
wobei jedes der Heizelemente (40) einen Hauptstreifen (45) und einen Deflektorstreifen (42) umfasst, wobei der Hauptstreifen (45) zumindest teilweise mit dem geraden Segment (35) der benachbarten Auslassleitung (33) in Bezug auf eine horizontale Projektionsebene, auf welcher die Heizelemente und der Kern sich projizieren, überlappt, und wobei die Deflektorstreifen (42) sich von dem Hauptstreifen (45) entlang des Knotens (32) in Bezug auf der horizontalen Projektionsebene erstrecken,
wobei jedes der Deflektorstreifen (42) in einer räumlich versetzten Beziehung zu dem Knoten (32) verläuft und in einer im Wesentlichen parallelen Beziehung im Bezug auf einer Erweiterungslinie des parallelen Segments (35) von der nicht-assozüerten Auslassleitung (33) in Bezug auf der horizontalen Projektionsebene verläuft,
einen Wärmeableiter (50; 50A), der an dem Interface zwischen der Mantelschicht (20) und dem Substrat (10) ausgebildet ist,
wobei der Wärmeableiter (50; 50A) eine thermische Leitfähigkeit aufweist, die höher ist als die von dem Mantelschicht, um den Wärmetransport von jedem der Heizelemente zu dem Substrat zu beschleunigen, um die nichtbeheizte Auslassleitung vor thermischen Einflüssen zu schützen,
**dadurch gekennzeichnet, dass**
der Wärmeableiter (50) mit dem Substrat integriert ausgebildet ist, um in die Mantelschicht in einem Abschnitt, der zwischen den geraden Segmenten (35) der beiden Auslassleitungen bezüglich der horizontalen Projektionsebene gelegen ist, hineinzuragen.

2. Optischer Schalter nach Anspruch 1, ferner umfassend:
einen einführenden Wärmeableiter (51), der an dem Interface zwischen der Mantelschicht und dem Substrat angeordnet ist und integral mit dem Substrat ausgebildet ist, um in die Mantelschicht an einem Abschnitt abwärts von der Einlassleitung (31) hineinzuragen,
wobei der einführende Wärmeableiter eine thermische Leitfähigkeit aufweist, die höher ist als die der Mantelschicht, um den thermischen Wärmetransport durch die Einlassleitung zu dem Substrat zu beschleunigen.

3. Optischer Schalter nach Anspruch 1, wobei
der Wärmeableiter (50) einen dreieckigen Abschnitt (52) in der horizontalen Projektionsebene umfasst, wobei der dreieckige Abschnitt (52) mit zwei angrenzenden Seiten (56) einen Vertex (57) dazwischen bildet, wobei der dreieckige Abschnitt so angeordnet ist, dass er die geraden Segmenten (35) benachbart zu dem Knoten (32) überlappt, wobei der Vertex in eine Richtung weg von dem Knoten gerichtet ist, und dass er mit den zwei angrenzenden Seiten (56) im Wesentlichen parallel in Bezug auf die Deflektorstreifen (42) der Heizelemente (40) bezüglich der horizontalen Projektionsebene angeordnet ist.

4. Optischer Schalter nach Anspruch 1, wobei
die Mantelschicht (20) durch eine untere Mantelschicht (21) und einer oberen Mantelschicht (22) gebildet ist, die auf dem Substrat (10) abgestuft übereinander angeordnet sind und ein Paar von Bodenmantelschichten (24) in der unteren Mantelschicht (21) zwischen der oberen Mantelschicht (22) und dem Substrat (10) angeordnet sind,
wobei die Bodenschichten lateral zueinander versetzt sind und einen lateral nach außen gerichteten Versatz in Bezug auf die angrenzenden Auslassleitungen (33) bezüglich der horizontalen Projektionsebenen aufweisen, wobei die Bodenmantelschicht (24) einen Brechungsindex aufweist, der kleiner ist als der Brechungsindex der Mantelschicht.

5. Optischer Schalter nach Anspruch 4, wobei
jede der Bodenmantelschichten (24) mit ihrer Spitze unterhalb der Spitze der Auslassleitungen des Kerns angeordnet ist.

## Revendications

1. Commutateur optique comportant :
un substrat (10 ; 10A) ayant une longueur et une largeur,
une couche de gaine (20) formée sur ledit substrat et ayant un coefficient thermo-optique négatif (dn/dT),
un noyau (30) incorporé dans ladite couche de gaine de manière à être entouré, ledit noyau s'étendant horizontalement généralement le long de la longueur dudit substrat, ledit noyau étant constitué d'un matériau transparent ayant un coefficient thermo-optique négatif (dn/dT), ledit noyau ayant un indice de réfraction différent d'un indice de réfraction de la couche de gaine périphérique pour engendrer une différence entre ces indices de réfraction de manière à constituer un guide de lumière avec la couche de gaine périphérique pour transmettre la lumière, ledit noyau incluant une ligne d'entrée (31) menant d'une borne d'entrée de lumière (91) à un noeud (32), deux lignes de sortie (33) dérivant dudit noeud et menant aux bornes de sortie de lumière individuelles (93),
deux éléments chauffants (40) chacun étant disposé à proximité adjacente de chacune desdites deux lignes de sortie pour s'étendre horizontalement généralement le long de la longueur dudit substrat, lesdits éléments chauffants étant adaptés pour être connectés à une source de tension afin de chauffer de manière sélective l'une desdites lignes de sortie pour réduire l'indice de réfraction de celle-ci jusqu'à un certain point pour rendre inactive la ligne de sortie sélectionnée, lesdites deux lignes de sortie du noyau incluant des segments droits individuels (35) qui dérivent dudit noyau (32),
chacun desdits éléments chauffants (40) incluant une barrette principale (45) recouvrant au moins partiellement ledit segment droit (35) de la ligne de sortie adjacente (33) par rapport à un plan de projection horizontal sur lequel les éléments chauffants et le noyau font saillie, et une barrette de déflexion (42) s'étendant depuis ladite barrette principale (45) le long dudit noyau (32) par rapport audit plan de projection horizontal, dans lequel chacune desdites barrette de déflexion (42) se déplace dans une relation espacée avec ledit noeud (32) et dans une relation généralement parallèle avec une ligne d'extension du segment droit (35) de la ligne de sortie non associée (33) par rapport audit plan de projection horizontal,
un dissipateur thermique (50 ; 50A) étant disposé au niveau de l'interface entre ladite couche de gaine (20) et ledit substrat (10),
ledit dissipateur thermique (50 ; 50A) ayant une conductivité thermique supérieure à celle de ladite couche de gaine afin d'envoyer un transfert thermique de chaleur depuis chacun desdits éléments chauffants audit substrat pour empêcher la ligne non chauffée parmi lesdites lignes de sortie d'être thermiquement affectée,
**caractérisé en ce que**
ledit dissipateur thermique (50) est intégralement formé avec ledit substrat pour faire saillie dans la couche de gaine au niveau d'une partie entre lesdits segments droits (35) des deux lignes de sortie par rapport au plan de projection horizontal.

2. Commutateur optique selon la revendication 1, incluant en outre :
un dissipateur thermique de base (51) lequel est disposé au niveau de l'interface entre ladite couche de gaine et ledit substrat, est formé intégralement avec ledit substrat pour faire saillie dans la couche de gaine au niveau d'une partie vers le bas de ladite ligne d'entrée (31),
ledit dissipateur thermique de base ayant une conductivité thermique supérieure à celle de ladite couche de gaine afin d'envoyer un transfert thermique de chaleur passant à travers ladite ligne d'entrée audit substrat.

3. Commutateur optique selon la revendication 1, dans lequel
ledit dissipateur thermique (50) inclut, dans ledit plan de projection horizontal, une section triangulaire (52) ayant deux côtés adjacents (56) formant un sommet (57) entre eux, ladite section triangulaire étant disposée pour recouvrir lesdits segments droits (35) adjacents audit noeud (32) avec ledit sommet éloigné dudit noeud et ayant lesdits deux côtés adjacents (56) généralement en relation parallèle respectivement auxdites barrettes de déflexion (42) desdits éléments chauffants (40) par rapport audit plan de projection horizontal.

4. Commutateur optique selon la revendication 1, dans lequel
ladite couche de gaine (20) est constituée d'une couche de gaine inférieure (21) et d'une couche de gaine supérieure (22) lesquelles sont superposées sur le substrat (10) étape par étape, et en ce que
une paire de couches de gaine basses (24) sont disposées dans ladite couche de gaine inférieure (21) entre ladite couche de gaine supérieure (22) et ledit substrat (10), lesdites couches basses étant latéralement espacées les unes des autres et décalées latéralement vers l'extérieur des lignes de sortie adjacentes (33) par rapport au plan de projection horizontal,
ladite couche de gaine basse (24) ayant un indice de réfraction inférieur à celui de ladite couche de gaine.

5. Commutateur optique selon la revendication 4, dans lequel
chacune desdites couches de gaine basses (4) a sa partie supérieure inférieure à la partie supérieure desdites lignes de sortie dudit noyau.
